# EUROPÄISCHE PATENTSCHRIFT

(11) **EP 2 473 085 B1**
(45) Veröffentlichungstag und Bekanntmachung des Hinweises auf die Patenterteilung: **11.02.2015**
(21) Anmeldenummer: 10745627.9
(22) Anmeldetag: 23.08.2010
(51) Int. Cl.: A47L 15/00, A47L 15/42

(54) **GESCHIRRSPÜLMASCHINE MIT VORRATSBEHÄLTER SOWIE ZUGEHÖRIGES VORHEIZVERFAHREN**
DISHWASHER COMPRISING A RESERVOIR AND ASSOCIATED PREHEATING METHOD
LAVE-VAISSELLE DOTÉ D'UN RÉSERVOIR ET PROCÉDÉ DE PRÉCHAUFFAGE ASSOCIÉ

(30) Priorität: 03.09.2009 DE 102009029185
(43) Veröffentlichungstag der Anmeldung: 11.07.2012
(73) Patentinhaber: BSH Bosch und Siemens Hausgeräte GmbH, 81739 München (DE)
(72) Erfinder: JERG, Helmut, 89537 Giengen (DE); ROSENBAUER, Michael, 86756 Reimlingen (DE); WAGNER, Franz-Josef, 86720 Nördlingen (DE)
(86) Internationale Anmeldenummer: PCT/EP2010/062244
(87) Internationale Veröffentlichungsnummer: WO 2011/026756

(56) Entgegenhaltungen:
- EP-A1- 0 911 438
- EP-A2- 1 055 389
- DE-A1- 3 901 169
- FR-A3- 2 641 552

## Beschreibung

Die vorliegende Erfindung betrifft eine Geschirrspülmaschine, insbesondere eine Haushaltsgeschirrspülmaschine, mit einer Steuereinrichtung, bei der mindestens ein Spülprogramm zum Steuern eines Spülgangs zum Spülen von Spülgut in einer Spülkammer und mindestens ein Vorheizprogramm zum Steuern eines Vorheizzyklus zum Vorheizen von Spülflotten für einen Spülgang jeweils getrennt voneinander aufrufbar sind, wobei der Vorheizzyklus eine Heizphase umfasst, während derer ein Umwälzen von Spülflotte und eine Beheizung der umgewälzten Spülflotte erfolgt.

Aus der Praxis ist eine Geschirrspülmaschine bekannt, bei der die Option besteht, vor der Durchführung eines Spülgangs zum Spülen von Spülgut, bei dem das Spülgut in einer Spülkammer mit Spülflotte behandelt wird, einen Vorheizzyklus zum Vorheizen von Spülflotte durchzuführen. Diese Betriebsfunktion wird als sogenannte "Wait & Run"- Funktion bezeichnet. Wird diese Option gewählt, so steht zu Beginn des Spülgangs eine vorgeheizte Spülflotte zur Verfügung, so dass wenigstens eine Heizphase während des Spülgangs abgekürzt oder gar ausgeblendet werden kann. Hierdurch kann der Zeitbedarf für einen Spülgang gesenkt werden.

Weiter ist aus der EP 0 911 438 A1 eine Geschirrspülmaschine gemäß dem Oberbegriff des Anspruchs 1 bekannt.

Nachteilig bei der bekannten Geschirrspülmaschine ist jedoch, dass der elektrische Energiebedarf der Geschirrspülmaschine bei Ausübung der Vorheizoption stark ansteigt.

Aufgabe der vorliegenden Erfindung ist es, eine Geschirrspülmaschine mit Vorheizoption bereitzustellen, bei der die Energieeffizienz verbessert ist.

Die Aufgabe wird bei einer Geschirrspülmaschine der eingangs genannten Art dadurch gelöst, dass der Vorheizzyklus eine der Heizphase nachgelagerte Pumpphase umfasst, während der ein Pumpen von zuvor umgewälzter und beheizter Spülflotte in einen Vorratsbehälter zum Speichern von Spülflotte erfolgt.

Dadurch lässt sich die Energieeffizienz der erfindungsgemäßen Geschirrspülmaschine, insbesondere Haushaltsgeschirrspülmaschine verbessern. Insbesondere lässt sich die Laufzeit der Geschirrspülmaschine zur Ausführung des Spülgangs eines gewählten Geschirrspülprogramms durch Vorerwärmen der Spülflotte und Zwischenspeichern dieser vorerwärmten Spülflotte in einem, insbesondere zusätzlichen Vorratsbehälter, bevor das gewählte Geschirrspülprogramm gestartet wird, verkürzen.

Die erfindungsgemäße Geschirrspülmaschine weist eine Steuereinrichtung zur automatischen Steuerung von Betriebsabläufen der Geschirrspülmaschine auf. Die Steuereinrichtung kann hierzu als sogenannte Ablaufsteuerung, insbesondere als elektronische Ablaufsteuerung, ausgebildet sein.

In der Steuereinrichtung ist wenigstens ein Spülprogramm zum Steuern eines Spülgangs zum Spülen von Spülgut, insbesondere zum Spülen von Geschirr, hinterlegt. Vorteilhafterweise sind dabei mehrere Spülprogramme vorgesehen, von denen jeweils eines durch den Bediener ausgewählt und gestartet werden kann. Hierdurch ist es möglich, den Ablauf eines Spülgangs, insbesondere z.B. an die Beladungsmenge, an die Beladungsart, an den Verschmutzungsgrad des Spülgutes und/oder an die gewünschte Dauer des Spülgangs, anzupassen.

Die jeweils hinterlegten Spülprogramme können vorzugsweise jeweils wenigstens einen Vorspülschritt zum Vorreinigen von Spülgut, wenigstens einen Reinigungsschritt zum gründlichen Reinigen von Spülgut, wenigstens einen Zwischenspülschritt zum Entfernen von verschmutzter Spülflotte vom Spülgut, wenigstens einen Klarspülschritt zur Vermeidung von Flecken am Spülgut und/oder zur Vorbereitung eines Trocknungsschritts, und/oder wenigstens einen Trocknungsschritt zum Trocknen des Spülguts umfassen. Ggf. können auch ein oder mehrere Teilschritte wie z.B. der Vorspülschritt oder der Zwischenspülschritt entfallen.

Darüber hinaus ist in der Steuereinrichtung wenigstens ein Vorheizprogramm zum Steuern eines Vorheizzyklus zum Vorheizen von Spülflotte für einen Spülgang gespeichert. Dabei können mehrere Vorheizprogramme vorgesehen sein, bei denen beispielsweise Spülflotte auf jeweils unterschiedliche Temperaturen vorgeheizt wird.

Unter einer Spülflotte wird dabei insbesondere eine Flüssigkeit verstanden, welche dazu vorgesehen ist, auf das Spülgut aufgebracht zu werden, um dieses zu reinigen und/oder in anderer Weise zu behandeln. So kann die Spülflotte beispielsweise auch zum Erwärmen des Spülgutes vorgesehen sein, was beispielsweise während eines Klarspülschrittes üblich ist. Eine Spülflotte besteht in aller Regel zu einem überwiegenden Teil aus Wasser. Dabei kann die Spülflotte je nach Betriebsphase der Geschirrspülmaschine mit Reinigungsmitteln, mit Reinigungshilfsmitteln wie beispielsweise Klarspülmittel, sonstigen Zusatzstoffen, und/oder mit Schmutz, der vom Spülgut gelöst wurde, angereichert sein.

Durch den jeweiligen Spülschritt eines gewählten Geschirrspülprogramms wird ein zugeordneter Teilspülgang eines Spülgangs umgesetzt. Der jeweilige Spülgang umfasst dabei insbesondere ein oder mehrere flüssigkeitsführende Teilspülgänge sowie einen spülgangabschließenden Trocknungsgang, bei dem zweckmäßigerweise keine Spülflottenflüssigkeit umgewälzt wird.

Das oder die Vorheizprogramme sind so ausgebildet, dass der Vorheizzyklus eine Heizphase umfasst, während der ein Umwälzen von Spülflotte und eine Beheizung der umgewälzten Spülflotte erfolgt. Durch gleichzeitiges Umwälzen und Beheizen der Spülflotte kann eine größere Menge von Spülflotte in relativ kurzer Zeit gleichmäßig erhitzt werden. Zum Umwälzen der Spülflotte während des Vorheizzyklus kann insbesondere eine Pumpe der Geschirrspülmaschine verwendet werden, welche während eines Spülgangs zum Umwälzen von Spülflotte verwendet wird, um Spülgut mittels einer Sprüheinrichtung mit der Spülflotte zu beaufschlagen, insbesondere zu besprühen. Zum Beheizen der umgewälzten Spülflotte während des Vorheizzyklus kann weiterhin eine Heizeinrichtung verwendet werden, welche primär dazu verwendet wird, Spülflotte während eines Spülgangs eines gewählten Geschirrspülprogramms zu beheizen. Durch beide Maßnahmen kann der konstruktive Aufbau der erfindungsgemäßen Geschirrspülmaschine einfach gehalten werden. Für das Vorheizen der Spülflotte reichen in vorteilhafter Weise die Komponenten des vorhandenen Flüssigkeitszirkulationssystems der Geschirrspülmaschine aus.

Vorheizprogramm und Spülprogramm können bei der erfindungsgemäß ausgebildeten Geschirrspülmaschine durch eine Bedienperson der Geschirrspülmaschine unabhängig voneinander gestartet werden. Damit hat die Bedienperson oder die Steuereinrichtung der Geschirrspülmaschine die Möglichkeit, zunächst das Vorheizprogramm zu starten, an dessen Ende in einer Pumpphase der Vorratsbehälter mit voraufgeheizter Spülflotte befüllt wird. Dadurch steht die Geschirrspülmaschine mit einer fertigen, voraufgeheizten bzw. vorerwärmten Spülbadteilmenge oder Spülbadmenge zum Start des Spülgangs eines auszuwählenden Geschirrspülprogramms betriebsbereit bzw. vorbereitet zur Verfügung und wartet auf die Aktivierung bzw. den Start des gewünschten Geschirrspülprogramms. Diese Aktivierung kann beispielsweise seitens des Benutzers oder automatisch durch die Steuereinrichtung der Geschirrspülmaschine erfolgen. Die Bedienperson hat also die Möglichkeit, nach diesem Bereitmachen der Geschirrspülmaschine zu einem beliebigen späteren Zeitpunkt nach Abschluss des Vorheizprogramms ein Spülprogramm zu initiieren. Das Spülgut kann während dieses "Wartezustands" der Geschirrspülmaschine, d.h. erst nach der Beendigung des Vorheizprogramms in die Spülkammer der Geschirrspülmaschine eingeladen werden. Es steht also zwischen dem Ende des Vorheizzyklus und dem Startzeitpunkt des jeweiligen Geschirrspülprogramms eine Wartezeit bzw. Pause zur Verfügung, während der die Spülkammer des Spülbehälters der Geschirrspülmaschine mit zu reinigendem Spülgut beladen werden kann. Die Umwälzung der Spülflotte im Vorheizzyklus kann insbesondere derart erfolgen, dass die ein oder mehreren Geschirrkörbe, die Seitenwände, die Deckenwandung des Spülbehälters, und/oder ein oder mehrere etwaig vorhandene obere Sprühelemente weitgehend trocken, d.h. von Spülflottenflüssigkeit weitgehend unbesprüht bleiben. Der Spülraum des Spülbehälters der Geschirrspülmaschine bleibt also während des Vorheizzyklus und während des Wartezustands danach im Wesentlichen trocken. In Verbindung mit der Verkürzung der Laufzeit des Spülprogramms auf Grund der vorgeheizten Spülflotte kann so die Zeit verkürzt werden, in welcher das Spülgut nicht zu seiner vorgesehenen Verwendung zur Verfügung steht. Natürlich ist auch hier nicht ausgeschlossen, dass die Geschirrspülmaschine zumindest teilweise schon vor Durchführung des Vorheizprogramms beladen wird. Das Bereitmachen der Geschirrspülmaschine mit einer voraufgewärmten Spülbadmenge im Vorratsbehälter und das anschließende Warten der Geschirrspülmaschine in diesem Bereitschaftszustand wird mit "wait & run" sowie das spätere Starten des gewünschten Geschirrspülprogramms mit "run" bezeichnet.

Es ist jedoch auch möglich, ein Spülprogramm dann aufzurufen, wenn ein Vorheizprogramm nicht durchgeführt wurde. Hierdurch verlängert sich allerdings die Laufzeit des Spülprogramms, wenn eine vergleichbare Reinigungs- und/oder Trocknungswirkung erzielt werden soll. Sofern diese Verlängerung aber in Kauf genommen werden kann, ergibt sich eine gewisse Einsparung an elektrischer Energie.

Bei der erfindungsgemäßen Geschirrspülmaschine ist insbesondere vorgesehen, dass der Vorheizzyklus eine der Heizphase nachgelagerte Pumpphase umfasst, während der ein Pumpen von zuvor umgewälzter und beheizter Spülflotte in einen Vorratsbehälter zum Speichern von Spülflotte erfolgt. Durch das Verbringen der zuvor umgewälzten und beheizen Spülflotte in einen geeigneten Vorratsbehälter, insbesondere im folgenden als Flottenspeicher bezeichnet, können Wärme- und damit Energieverluste, insbesondere zwischen dem Vorheizzyklus und dem nachfolgenden Spülgang, verringert werden.

Im Vergleich zu Lösungen, bei denen das beheizte Wasser nach Abschluss des Vorheizzyklus in der Spülkammer des Spülbehälters der Geschirrspülmaschine gespeichert wird, können bei der erfindungsgemäß ausgebildeten Geschirrspülmaschine sowohl Wärmeverluste durch Wärmeleitung als auch Wärmeverluste durch Verdampfung von Spülflotte verringert werden. Wenn nämlich die vorgeheizte Spülflotte lediglich in der Spülkammer des Spülbehälters der Geschirrspülmaschine gespeichert werden würde, so würde sie sich in einem unterem Bereich der Spülkammer verteilen, was dazu führen würde, dass sie großflächig in thermischen Kontakt mit dem Boden und/oder einem Sammeltopf der Spülkammer kommt. Hierdurch würde über den Boden beziehungsweise über den Sammeltopf Wärme nach außen abgeleitet werden. Ebenso könnte aufgrund des relativ großen Volumens der Spülkammer ein nennenswerter Teil der Spülflotte in der Spülkammer verdampfen, so dass die verbleibende Spülflotte weiter abgekühlt werden würde. Diese Nachteile können bei der erfindungsgemäßen Geschirrspülmaschine durch die Verwendung eines Vorratsbehälters mit geeigneter Größe vermieden werden. Insgesamt können so Energieverluste zwischen dem Abschluss des Vorheizzyklus und dem Beginn des Spülgangs verringert werden. Hierdurch kann der Energieeinsatz zum Nachheizen der gespeicherten Spülflotte während des Spülgangs verringert werden, was die Energieeffizienz der erfindungsgemäßen Geschirrspülmaschine verbessert. Der Vorteil ist dabei umso größer, je länger diese Zwischenphase auf Grund des Bedienerverhaltens dauert.

Da zudem die Temperatur der gespeicherten Spülflotte insbesondere zu Beginn des Spülprogramms höher ist, kann mit der Spülflotte in vorteilhafter Weise bereits zu Beginn der Behandlung des Spülguts eine intensive thermische Wirkung erreicht werden, was sich beispielsweise während eines Reinigungsgangs des Spülgangs durch eine höhere Reinigungsleistung bemerkbar macht, was wiederum eine Verkürzung des Reinigungsgangs bei vergleichbarer Reinigungswirkung erlauben kann.

Weiterhin kann das Spülgut insbesondere während eines Klarspülgangs schneller mittels der zwischengespeicherten, im vorgeschalteten Vorheizzyklus vorerwärmten Spülflotte aus dem Vorratsbehälter erwärmt werden, so dass das Spülgut die für einen nachfolgenden Trocknungsgang erforderliche Temperatur schneller erreichen kann. Hierdurch kann in vorteilhafter Weise die Dauer des Spülgangs insgesamt weiter verkürzt werden.

Durch das Speichern der vorgeheizten Spülflotte in einem Vorratsbehälter kann zudem in vielen Fällen verhindert werden, dass während des Beladens der Spülkammer nach einem Vorheizzyklus eine größere Menge von Wasserdampf aus der Geschirrspülmaschine austritt. Hierdurch kann insbesondere eine Anreicherung der Umgebungsluft mit Feuchtigkeit verringert werden. Zudem kann eine unerwünschte Einwirkung von Wasserdampf auf den Bediener beim Beladen der Spülkammer der Geschirrspülmaschine vermieden werden. Hierdurch kann der Bedienkomfort gesteigert werden.

Gemäß einer zweckmäßigen Weiterbildung der Erfindung kann insbesondere vorgesehen sein, dass während der Heizphase des Vorheizzyklus Spülflotte durch eine Heizeinrichtung beheizt ist. Diese kann insbesondere als Durchlaufheizung ausgebildet sein. Eine Durchlaufheizung umfasst ein wasserleitendes Element, beispielsweise ein Rohr, an oder in dem wenigstens ein Heizelement angeordnet ist. Eine Durchlaufheizung zeichnet sich dabei durch eine geringe Baugröße, durch einen guten Wirkungsgrad und durch eine gleichmäßige Beheizung der umgewälzten Spülflotte auf. Die Durchlaufheizung kann zweckmäßigerweise in diejenige Pumpe integriert sein, welche während der Heizphase zum Umwälzen der Spülflotte verwendet wird.

Nach einer vorteilhaften Weiterbildung der Erfindung kann insbesondere vorgesehen sein, dass während der Heizphase des Vorheizzyklus Spülflotte durch eine Umwälzpumpe umgewälzt ist, welche eingangsseitig mit einem Sammeltopf der Spülkammer verbunden ist. Eine derartige Umwälzpumpe ist in aller Regel bei modernen Geschirrspülmaschinen vorhanden, um Spülflotte während eines Spülgangs umzuwälzen, um so das Spülgut mit Spülflotte zu beaufschlagen. Durch die Verwendung einer derartigen Pumpe ist zur Durchführung der Heizphase keine separate Pumpe erforderlich. Hierdurch vereinfacht sich der konstruktive Aufbau der erfindungsgemäßen Geschirrspülmaschine.

Gemäß einer bevorzugten Weiterbildung der Erfindung kann zweckmäßigerweise vorgesehen sein, dass während der Heizphase des Vorheizzyklus Spülflotte über eine in der Spülkammer angeordnete Sprüheinrichtung in den Sammeltopf der Spülkammer zurückgeführt ist, welche mit der Ausgangsseite der Umwälzpumpe verbindbar ist, und welche zum Besprühen von Spülgut mit Spülflotte während eines Spülgangs vorgesehen ist. Eine derartige Sprüheinrichtung ist bei praktisch allen modernen Geschirrspülmaschinen ohnehin vorhanden. Damit kann ein geschlossener Umwälzkreislauf realisiert werden, ohne dass der konstruktive Aufbau vorbekannter Geschirrspülmaschinen wesentlich verändert werden müsste.

Gemäß einer vorteilhaften Weiterbildung der Erfindung weist die Sprüheinrichtung mehrere individuell über eine Wasserweiche mit der Umwälzpumpe verbindbare Sprühelemente auf, wobei die Wasserweiche so gesteuert ist, dass während der Heizphase die Spülflotte im Wesentlichen über ein in einem unteren Bereich der Spülkammer angeordnetes Sprühelement in den Sammeltopf zurückgeführt ist. Sprüheinrichtungen moderner Geschirrspülmaschinen weisen in aller Regel mehrere individuell mit der Umwälzpumpe verbindbare Sprühelemente auf, wobei die Sprühelemente feststehend oder beweglich ausgebildet sein können. Zudem ist üblicherweise eine Wasserweiche vorgesehen, welche durch die Steuereinrichtung derart steuerbar ist, dass die Sprühelemente einzeln, in Gruppen oder insgesamt mit Spülflotte beschickt werden können.

Wenn nun die Wasserweiche so gesteuert ist, dass während der Heizphase des Vorheizzyklus Spülflotte im Wesentlichen über ein in einem unteren Bereich der Spülkammer angeordnetes Sprühelement oder über mehrere in einem unteren Bereich der Spülkammer angeordnete Sprühelemente in den Sammeltopf zurückgeführt wird, so wird die Spülflotte in einem vergleichsweise kurzen Umwälzkreislauf umgewälzt. Hierdurch kann eine Wärmeabgabe von der Spülflotte an wasserführende Teile im Umwälzkreislauf während der Heizphase minimiert werden. Hierdurch kann die Energieeffizienz der erfindungsgemäßen Geschirrspülmaschine weiter verbessert werden. Zudem kann ein Kontakt der Spülflotte während der Heizphase mit eventuell bereits eingeladenem Spülgut verringert oder ganz vermieden werden. Auf diese Weise kann verhindert werden, dass das Spülgut der umgewälzten Spülflotte im Vorheizzyklus unzulässig viel Wärme entzieht.

Gemäß einer vorteilhaften Weiterbildung der Erfindung kann insbesondere vorgesehen, dass eine Drehzahl der Umwälzpumpe so gesteuert ist, dass diese während der Heizphase des Vorheizzyklus insbesondere geringer ist als ihre Nenndrehzahl bei Durchführung eines Teilspülgangs, insbesondere Reinigungsgangs, des Spülgangs des jeweilig gewählten Geschirrspülprogramms. Auf diese Weise ergibt sich während der Heizphase des Vorheizzyklus eine geringere Umwälzgeschwindigkeit als beispielsweise während eines Reinigungsgangs eines Spülgangs. Insbesondere tritt hierdurch beim Vorheizzyklus die Spülflotte mit einer geringeren Geschwindigkeit aus den Sprühelementen der Sprüheinrichtung aus. Auf diese Weise wird die in die Spülkammer eingesprühte Spülflotte in der Spülkammer weniger verteilt, so dass diese weniger Wärme an die Spülkammer abgibt. Hierdurch kann der elektrische Energiebedarf des Vorheizzyklus weiter gesenkt werden.

Gemäß einer besonders bevorzugten Weiterbildung der Erfindung kann die Drehzahl der Umwälzpumpe insbesondere so gesteuert sein, dass während der Heizphase des Vorheizzyklus aus einem unter einem Geschirrkorb angeordneten Sprühelement austretende Spülflotte den Geschirrkorb und/oder das darin befindliche Spülgut im Wesentlichen nicht erreicht, d.h. dieses weitgehend unbespritzt und damit trocken bleibt. Moderne Geschirrspülmaschinen weisen in aller Regel einen oder mehrere Geschirrkörbe zum Plazieren von Spülgut auf. Dabei ist in vielen Fällen unter den vorhandenen Geschirrkörben jeweils ein drehbar gelagerter Sprüharm angeordnet, der an seiner Oberseite Austrittsdüsen für Spülflotte aufweist. Dabei arbeitet die Umwälzpumpe während der Durchführung eines Spülgangs zumindest zeitweise mit einer derart hohen Drehzahl, dass die Geschwindigkeit der durch die Düsen austretenden Spülflotte so hoch ist, dass die Spülflotte das im Geschirrkorb befindliche Spülgut, beispielsweise zum Zwecke der Reinigung, erreicht. Insbesondere durch eine Absenkung der Drehzahl der Umwälzpumpe während der Heizphase des Vorheizzyklus kann nun erreicht werden, dass die Spülflotte so langsam aus den Düsen austritt, dass weitgehend vermieden ist, dass die Spülflotte weder in Kontakt mit dem Geschirrkorb noch mit dem darin befindlichen Spülgut kommt. Hierdurch wird eine Aufheizung des Geschirrkorbs beziehungsweise des Spülguts weitgehend vermieden, was gleichzeitig ein unzulässig starkes Abkühlen der Spülflotte verhindert. Auf diese Weise kann der Energieverbrauch während der Heizphase des Vorheizzyklus weiter minimiert werden.

Nach einer zweckmäßigen Weiterbildung der Erfindung kann die Umwälzpumpe insbesondere einen bürstenlosen Elektromotor, vorzugsweise einen bürstenlosen Gleichstrommotor, umfassen. Der bürstenlose Elektromotor kann insbesondere als Permanentmagnetmotor ausgebildet sein. Ein derartiger bürstenloser Permanentmagnetmotor kann als bürstenloser Gleichstrommotor, auch BLDC-Motor genannt, als bürstenloser Wechselstrommotor, auch BLAC-Motor genannt, oder als Synchronmotor ausgebildet sein. Der Rotor des Motors umfasst dabei wenigstens einen Permanentmagneten, wohingegen der Stator mehrere Elektromagnete aufweist. Die Elektromagnete werden dabei über eine Ansteuerelektronik kommutiert. Im Vergleich zu anderen möglichen Motorkonzepten kann hierdurch sowohl die Drehrichtung als auch die Drehzahl des Motors in einfacher Weise gesteuert oder geregelt werden. Durch Betreiben des Motors in genau einer Drehrichtung ist es möglich, die wasserführenden Teile der Umwälzpumpe strömungstechnisch zu optimieren. Hierdurch ergibt sich eine hohe Förderleistung bei geringem Energieeinsatz. Zudem kann die Förderleistung der Umwälzpumpe bedarfsgerecht gesteuert oder geregelt werden, was die Energieeffizienz weiter steigert. Weiterhin kann der büstenlose Permanentmagnetmotor als Nassläufer ausgebildet sein, so dass aufwändige Dichtungsmaßnahmen entfallen.

Nach einer vorteilhaften Weiterbildung der Erfindung kann während der Pumpphase des Vorheizzyklus Spülflotte durch die Umwälzpumpe über die Wasserweiche oder ein Ventil in den Vorratsbehälter gepumpt werden. Hierdurch kann auf eine separate Pumpe für die Pumpphase des Vorheizzyklus verzichtet werden, was den Aufbau der erfindungsgemäßen Geschirrspülmaschine einfach hält.

In einem vorteilhaften Ausführungsbeispiel kann die Wasserweiche insbesondere so ausgebildet sein, dass sie einen Ausgang aufweist, der mit dem Vorratsbehälter verbunden ist. Dabei kann es von Vorteil sein, wenn die Wasserweiche zweckmäßigerweise so ausgebildet ist, dass sie während der Pumpphase des Vorheizzyklus so steuerbar ist, dass der zum Vorratsbehälter führende Ausgang geöffnet und die anderen Ausgänge, die üblicherweise mit Sprühelementen der Sprüheinrichtung verbunden sind, geschlossen sind.

In einem anderen vorteilhaften Ausführungsbeispiel kann eine herkömmliche Wasserweiche verwendet werden, deren Ausgänge lediglich mit den Sprühelementen der Sprüheinrichtung verbunden sind. Vorzugsweise ein zusätzliches Ventil, dessen Eingang mit dem Eingang der Wasserweiche verbunden sein kann, übernimmt dann die Zuflusssteuerung zum Vorratsbehälter. Dabei kann die Wasserweiche insbesondere so gesteuert sein, dass sämtliche ihrer Ausgänge verschlossen sind, so dass die durch die Umwälzpumpe geförderte Spülflotte nicht mehr umgewälzt, sondern vollständig in Richtung Vorratsbehälter gepumpt wird.

Gemäß einer vorteilhaften Weiterbildung der Erfindung kann während der Pumpphase des Vorheizzyklus die Drehzahl der Pumpe im Vergleich zur Heizphase des Vorheizzyklus erhöht sein. Hierdurch kann die Spülflotte besonders schnell in den Vorratsbehälter transportiert werden, so dass Wärmeverluste während der Pumpphase verringert werden können.

Gemäß einer zweckmäßigen Weiterbildung der Erfindung kann nach dem Ende der Pumpphase eine Ausgabe einer Meldung vorgesehen sein, welche dem Benutzer das Ende des Vorheizzyklus signalisiert. Hierdurch wird der Bediener in die Lage versetzt, das Spülprogramm sobald als möglich zu nutzen.

Nach einer zweckmäßigen Weiterbildung der Erfindung kann die Meldung über eine Bedienschnittstelle erfolgen, welche akustische und/oder optische Ausgabemittel umfasst. Akustische Ausgabemittel können beispielsweise Lampen, Leuchtdioden, alpha-numerische und/oder graphische Ausgabemittel umfassen. Optische Ausgabemittel können beispielsweise Summer und/oder Lautsprecher aufweisen.

Gemäß einer besonders vorteilhaften Weiterbildung der Erfindung können insbesondere Isoliermittel vorgesehen sein, welche einer Übertragung von im Inneren des Vorratsbehälters befindlicher Wärme nach außen entgegenwirken. Derartige Isoliermittel wirken einer Abkühlung der Spülflotte im Vorratsbehälter entgegen. Hierdurch kann die Effizienz der Geschirrspülmaschine erhöht werden, insbesondere wenn zwischen dem Vorheizzyklus und dem Spülgang ein längerer Zeitraum liegt.

Gemäß einer zweckmäßigen Weiterbildung der Erfindung kann der Vorratsbehälter so ausgebildet sein, dass darin befindliche Spülflotte durch ihre Gewichtskraft über einen steuerbaren Auslauf in die Spülkammer der Geschirrspülmaschine gelangen kann. Auf diese Weise kann auf eine Einrichtung zum aktiven Pumpen der Spülflotte in die Spülkammer verzichtet werden.

Weiterhin betrifft die Erfindung auch ein Verfahren zum Betreiben einer erfindungsgemäßen Geschirrspülmaschine, insbesondere Haushaltsgeschirrspülmaschine, bei dem ein Spülgang zum Spülen von Spülgut in einer Spülkammer und ein Vorheizzyklus zum Vorheizen von Spülflotte für den Spülgang durchgeführt wird, wobei der Vorheizzyklus eine Heizphase umfasst, während der Spülflotte umgewälzt und beheizt wird.

Bei dem erfindungsgemäßen Verfahren ist vorgesehen, dass der Vorheizzyklus eine der Heizphase nachgelagerte Pumpphase umfasst, während der zuvor umgewälzte und beheizte Spülflotte in einen Vorratsbehälter zum Speichern von Spülflotte gepumpt wird.

Das erfindungsgemäße Verfahren ermöglicht einen effizienten Betrieb einer Geschirrspülmaschine, insbesondere einer erfindungsgemäßen Geschirrspülmaschine.

Sonstige Aus- und Weiterbildungen der Erfindung sind in den Unteransprüchen wiedergegeben. Die vorstehend erläuterten und/oder die in den Unteransprüchen wiedergegebenen vorteilhaften Aus- sowie Weiterbildungen der Erfindung können dabei einzeln oder aber auch in beliebiger Kombination miteinander bei der erfindungsgemäßen Geschirrspülmaschine und dem erfindungsgemäßen Verfahren zur Anwendung kommen.

Die Erfindung, ihre Aus- sowie Weiterbildungen sowie deren Vorteile werden nachfolgend anhand von Zeichnungen erläutert.

Es zeigen:
- **Figur 1**: ein vorteilhaftes Ausführungsbeispiel einer erfindungsgemäßen Haushaltsgeschirrspülmaschine in einer schematischen Seitenansicht, und
- **Figur 2**: einen beispielhaften Betriebsablauf der Geschirrspülmaschine von Figur 1.

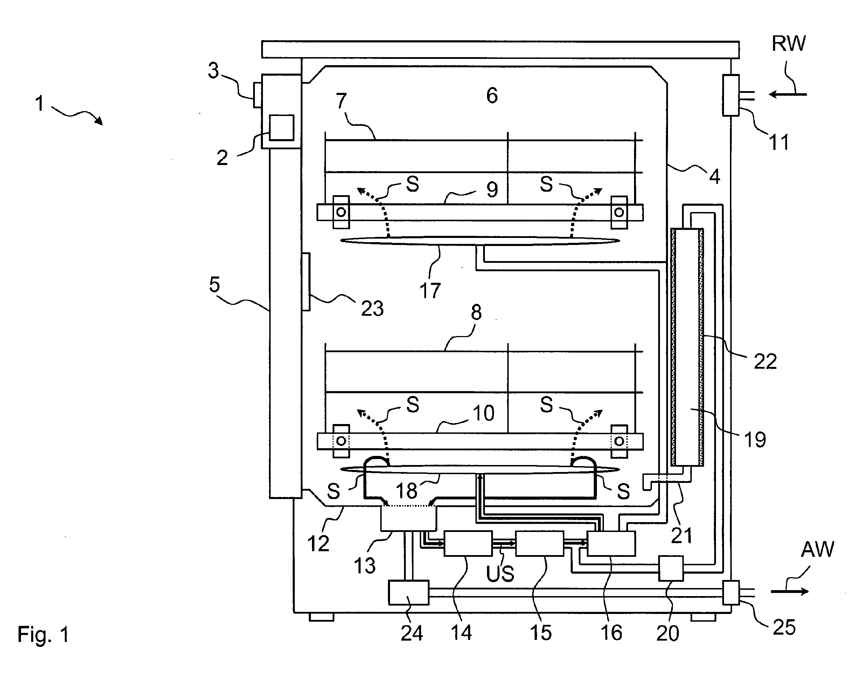

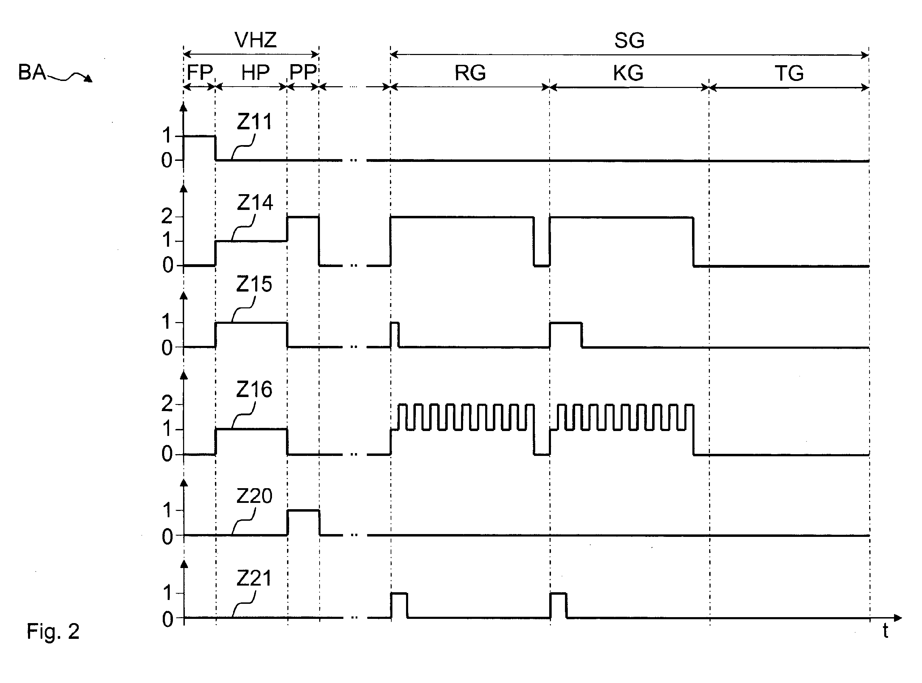

In den Figuren 1, 2 sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

Figur 1 zeigt ein vorteilhaftes Ausführungsbeispiel einer erfindungsgemäßen Haushaltsgeschirrspülmaschine 1 in einer schematischen Seitenansicht. Die Geschirrspülmaschine 1 weist eine Steuereinrichtung 2 auf, in welcher wenigstens ein Spülprogramm zum Steuern eines Spülgangs zum Spülen von Spülgut, insbesondere Geschirr, Gläser, und/oder Besteck, hinterlegt ist. Zweckmäßigerweise sind dabei mehrere Spülprogramme gespeichert, so dass durch Auswahl eines geeigneten Spülprogramms der Ablauf eines durch die Steuereinrichtung 2 gesteuerten Spülgangs beispielsweise an die Beladungsmenge, an die Beladungsart, an den Verschmutzungsgrad des Spülguts und/oder an die gewünschte Dauer des Spülgangs angepasst werden kann. Das oder die Spülprogramme können dabei jeweils wenigstens einen Vorspülschritt, wenigstens einen Reinigungsschritt, wenigstens einen Zwischenspülschritt, wenigstens einen Klarspülschritt und/oder wenigstens einen Trocknungsschritt umfassen.

Weiterhin ist in der Steuereinrichtung 2 wenigstens ein Vorheizprogramm zum Steuern eines Vorheizzyklus zum Vorheizen von Spülflotte für einen Spülgang hinterlegt. Bei der Durchführung des Vorheizzyklus wird zumindest ein Teil der für einen Spülgang benötigten Spülflotte erhitzt und nach Abschluss des Vorheizzyklus bis zur Durchführung des Spülgangs zwischengespeichert. Das Vorheizprogramm kann dabei ausgeführt werden, bevor das zum Spülen vorgesehene Spülgut in die Geschirrspülmaschine 1 eingeladen wird.

Wenn dann das Spülgut in die Geschirrspülmaschine eingebracht ist, steht zu Beginn der Durchführung des Spülgangs vorgeheizte Spülflotte zur Verfügung, so dass eine oder mehrere Heizphasen für Spülflotte während eines oder mehrere Teilspülgänge des Spülgangs abgekürzt oder ausgeblendet werden können. Hierdurch kann der Spülgang insgesamt deutlich schneller abgeschlossen werden. Im Ergebnis kann auf diese Weise die Zeitdauer, in welcher das Spülgut in der Geschirrspülmaschine 1 mindestens verbleibt und folglich nicht zur Verwendung zur Verfügung steht, verringert werden. Dieser Vorteil ergibt sich insbesondere dann, wenn die Geschirrspülmaschine 1, wie vor allem in Europa üblich, zur Aufnahme von haushaltsüblichem Kaltwasser vorgesehen ist. Aber auch dann, wenn die Geschirrspülmaschine zur Aufnahme von Warmwasser ausgebildet ist, was unter anderem im nordamerikanischen Raum vorherrschend ist, können Geschwindigkeitsvorteile realisiert werden, wenn die Temperatur des bereitstehenden Warmwassers geringer als die benötigte Temperatur einer während des Spülgangs verwendeten Spülflotte ist.

Der Steuereinrichtung 2 ist eine Bedienschnittstelle 3 zugeordnet, welche es einem Bediener der Geschirrspülmaschine 1 erlaubt, eines der Vorheizprogramme oder eines der Spülprogramme unabhängig voneinander aufzurufen und dadurch zu starten. Damit hat der Bediener einerseits die Möglichkeit, zunächst einen Vorheizzyklus und später einen Spülgang zu initiieren. Der Start des Spülgangs kann dabei prinzipiell zu einem beliebigen Zeitpunkt nach Abschluss des Vorheizzyklus erfolgen. Da folglich der Vorheizzyklus und der Spülgang zeitlich nicht aneinander gekoppelt sind, kann die Geschirrspülmaschine 2 sehr flexibel nach den Bedürfnissen des Bedieners eingesetzt werden. Andererseits hat der Bediener die Möglichkeit, einen Spülgang ohne vorangegangen Vorheizzyklus zu starten, was sinnvoll sein kann, wenn ausreichend Zeit für die Durchführung eines Spülgangs zur Verfügung steht oder wenn eine an sich vorgesehene Durchführung eines Vorheizzyklus versehentlich unterblieben ist oder ein Vorheizzyklus nicht gewollt war. Die Bedienschnittstelle 3 ist weiterhin zur Ausgabe von Meldungen ausgebildet, welche der Bedienerführung dienen. Hiezu kann sie optische und/oder akustische Ausgabemittel umfassen.

Die Geschirrspülmaschine 1 umfasst weiterhin einen Spülbehälter 4, der durch eine Tür 5 verschließbar ist, so dass eine geschlossene Spülkammer 6 zum Spülen von Spülgut entsteht. In Figur 1 ist die Tür 5 in ihrer Geschlossenstellung gezeigt. Die Tür 5 ist durch Schwenken um eine senkrecht zur Zeichenebene angeordnete Achse in eine Offenstellung bringbar, in der sie im Wesentlichen waagerecht ausgerichtet ist und das Einbringen bzw. das Entnehmen von Spülgut ermöglicht. Im in Figur 1 gezeigten Ausführungsbeispiel ist die Bedienschnittstelle 3 in bedienungsfreundlicher Weise an einem oberen Abschnitt der Tür 5 angeordnet. Auch die Steuereinrichtung 2 ist dort positioniert, so dass die erforderlichen Signalverbindungen zwischen der Bedienschnittstelle 3 und der Steuereinrichtung 2 kurz gehalten werden können. Prinzipiell ist es jedoch möglich, die Bedienschnittstelle 3 und/oder die Steuereinrichtung 2 an anderer Stelle anzuordnen. Die Steuereinrichtung 2 könnte auch dezentral ausgebildet sein, worunter verstanden wird, dass sie räumlich auseinanderliegende Komponenten umfasst, welche über Kommunikationsmittel derart verbunden sind, dass sie zusammenwirken können.

Die Geschirrspülmaschine 1 weist zum Positionieren von Spülgut einen oberen Geschirrkorb 7 und einen unteren Geschirrkorb 8 auf. Der obere Geschirrkorb 7 ist dabei an Ausfahrschienen 9 angeordnet, welche jeweils an einer Seitenwand des Spülbehälters 4 befestigt sind. Der Geschirrkorb 7 ist bei geöffneter Tür 5 mittels der Ausfahrschienen 9 aus dem Spülbehälter 4 ausfahrbar, was das Be- bzw. Entladen des oberen Geschirrkorbes 7 erleichtert. Der untere Geschirrkorb 8 ist in analoger Weise an Ausfahrschienen 10 angeordnet.

Weiterhin umfasst die Geschirrspülmaschine 1 eine Zuführeinrichtung 11 für Rohwasser RW, welche so ausgebildet ist, dass von außen zugeführtes Rohwasser RW über nicht gezeigte Mittel kontrolliert in das Innere der Spülkammer 6 gelangen kann und dort als Spülflotte S zum Spülen von Spülgut zur Verfügung steht. Die Zuführeinrichtung 11 ist durch die Steuereinrichtung 2 steuerbar und zweckmäßigerweise so ausgebildet, dass das aufgenommene Rohwasser RW zunächst über eine nicht dargestellte Rohwasseraufbereitungseinrichtung zum Aufbereiten des Rohwassers RW und/oder über einen Wärmetauscher zum Vorwärmen des Rohwassers RW geführt ist, bevor es in die Spülkammer 6 gelangt.

An einem Boden 12 des Spülbehälters 4 ist ein Sammeltopf 13 ausgebildet, in dem sich in der Spülkammer 6 befindliche Spülflotte S aufgrund ihrer Schwerkraft sammelt. Der Sammeltopf 13 steht dabei in Verbindung mit einer Umwälzpumpe 14, mit deren Hilfe Spülflotte S aus dem Sammeltopf 13 über eine Heizeinrichtung 15 zu einer Wasserweiche 16 gepumpt werden kann.

Die Umwälzpumpe 14, die Heizeinrichtung 15 und die Wasserweiche 16 werden während des Betriebes der Geschirrspülmaschine 1 durch die Steuereinrichtung 2 gesteuert. Sie bilden zusammen mit Verbindungsleitungen und ein oder mehreren Sprüheinrichtungen die Hauptkomponenten des Flüssigkeitskreislaufsystems der Geschirrspülmaschine.

Die Umwälzpumpe 14 weist bevorzugt einen bürstenlosen Elektromotor, bevorzugt einen bürstenlosen Permanentmagnetmotor auf, der als Gleichstrommotor, Wechselstrommotor oder Synchronmotor ausgebildet sein kann. Der Rotor eines bürstenlosen Permanentmagnetmotors umfasst wenigstens einen Permanentmagneten, der Stator hingegen mehrere Elektromagnete. Diese Elektromagnete werden über eine Ansteuerelektronik kommutiert. Über die Ansteuerelektronik kann die Drehrichtung des Permanentmagnetmotor eindeutig festgelegt werden, so dass die wasserführenden Teile der Umwälzpumpe 14 strömungstechnisch bezüglich einer vorgesehenen Drehrichtung optimiert werden können. Hierdurch ergibt sich eine hohe Förderleistung bei geringem Energieeinsatz. Zudem kann mittels der Ansteuerelektronik die Drehzahl des Motors und damit die Förderleistung der Umwälzpumpe 14 bedarfsgerecht gesteuert werden. Weiterhin kann der bürstenlose Permanentmagnetmotor als Nassläufer ausgebildet sein, so dass aufwändige Dichtungsmaßnahmen entfallen.

Die Heizeinrichtung 15 ist zum Beheizen von Spülflotte S vorgesehen und als Durchlaufheizung 15 ausgebildet. Alternativ oder zusätzlich könnte auch ein offen angeordnetes Heizelement, beispielsweise ein in der Spülkammer 6 oder ein in dem Sammeltopf 13 angeordnetes Heizelement, vorgesehen sein.

Die Wasserweiche 16 ermöglicht eine gesteuerte Weiterleitung der von der Umwälzpumpe 14 zugeführten Spülflotte S. Sie weist im Ausführungsbeispiel zwei Ausgänge auf, von denen ein erster mit einem oberen drehbaren Sprüharm 17 und ein zweiter mit einem unteren drehbaren Sprüharm 18 verbunden ist. Die Sprüharme 17 und 18 bilden eine in der Spülkammer 6 angeordnete Sprüheinrichtung 17, 18, welche eine Beaufschlagung von Spülgut mit Spülflotte S ermöglicht. Es könnten aber auch weitere Ausgänge vorgesehen sein, beispielsweise um die Beschickung weiterer Sprüharme oder feststehender Sprühelemente zu ermöglichen. Die Wasserweiche 16 ist so steuerbar, dass die von der Umwälzpumpe 14 geförderte Spülflotte wahlweise durch keinen der Sprüharme 17, 18, durch einen der Sprüharme 17, 18 oder durch beide Sprüharme 17, 18 in den Spülbehälter 2 gefördert ist.

Weiterhin weist die erfindungsgemäße Geschirrspülmaschine einen Vorratsbehälter 19 auf. Im Ausführungsbeispiel der Figur 1 kann der Vorratsbehälter 19 über ein Ventil 20 mit Spülflotte S befüllt werden, wobei das Ventil 20 durch die Steuereinrichtung 2 gesteuert ist. Der Vorratsbehälter 19 weist weiterhin einen steuerbaren Auslass 21 auf, der in die Spülkammer 6 mündet. Der Auslass 21 ist an einem unteren Ende des Vorratbehälters 19 ausgebildet, so dass bei geöffnetem Auslass 21 die in dem Vorratbehälter 19 befindliche Spülflotte S durch ihre Gewichtskraft in die Spülkammer 6 der Geschirrspülmaschine 1 gelangen kann. Der Vorratsbehälter 19 ist an einem wesentlichen Teil seiner Oberfläche mit schichtartig angeordneten thermischen Isoliermitteln 22 versehen, so dass eine im Vorratsbehälter 19 befindliche Spülflotte S allenfalls langsam abkühlt.

Die Geschirrspülmaschine 1 kann weiterhin eine Dosiereinrichtung 23 aufweisen, welche beispielweise an der Innenseite der Tür 5 angeordnet ist. Die Dosiereinrichtung 23 ist durch die Steuereinrichtung 2 gesteuert und ermöglicht es, dass der Spülflotte S während eines Spülgangs automatisch Reinigungsmittel und/oder Reinigungshilfsmittel, wie beispielsweise Klarspülmittel, zugesetzt wird.

Die Funktion der Geschirrspülmaschine 1 ist nun die folgende: Wenn der Bediener ein Vorprogramm zum Steuern eines Vorheizzyklus aktiviert, wird in einer zunächst durchgeführten Füllphase eine vorgesehene Menge von Rohwasser RW mittels der Zuführeinrichtung 11 in die Spülkammer 6 eingebracht. Das so eingebrachte Rohwasser RW bildet dort eine Spülflotte S. Diese Spülflotte S sammelt sich aufgrund ihrer Schwerkraft in dem Sammeltopf 13. In einer nun folgenden Heizphase wird die Umwälzpumpe 14 eingeschaltet, so dass Spülflotte aus dem Sammeltopf 13 zur Heizeinrichtung 15 gepumpt wird. Dabei ist die Heizeinrichtung 15 zumindest zeitweise eingeschaltet, so dass die umgewälzte Spülflotte S beheizt wird. Die mit dem Ausgang der Heizeinrichtung 15 verbundene Wasserweiche 16 ist während der Heizphase so gesteuert, dass die geförderte Spülflotte lediglich zum unteren Sprüharm 18 geleitet ist. Dort tritt die Spülflotte S durch die an der Oberseite des Sprüharms 18 ausgebildeten Düsen aus und gelangt aufgrund ihrer Gewichtskraft zurück in den Sammeltopf 13. Es entsteht so ein geschlossener Umwälzstrom US, der durch durchgezogene Pfeile symbolisiert ist. Während der Heizphase des Vorheizzyklus wird die Umwälzpumpe 14 mit lediglich geringer Drehzahl betrieben, so dass die aus dem unteren Sprüharm 18 austretende Spülflotte S eine derartig geringe Geschwindigkeit aufweist, dass sie, obwohl sie nach oben aus dem Sprüharm 18 austritt, den unteren Geschirrkorb 8 mit dem darin befindlichen Spülgut kaum oder gar nicht erreicht. Dadurch, dass während der Heizphase lediglich der untere Sprüharm 18 mit Spülflotte beschickt wird und dadurch, dass die Umwälzpumpe 14 lediglich mit geringer Drehzahl betrieben wird, gelangt die aus dem Sammeltopf 13 entnommene Spülflotte S auf dem kürzest möglichen Weg in den Sammeltopf 13 zurück. Hierdurch wird bewirkt, dass die den Umwälzstrom US bildende Spülflotte S lediglich eine geringe Wärmemenge in der Spülkammer 6 abgibt.

Wenn die Spülflotte S eine vorgesehene Temperatur erreicht hat, was mittels eines nicht gezeigten Temperatursensors überprüft werden kann, schließt sich eine Pumpphase des Vorheizzyklus an, in der die Spülflotte S in den Vorratsbehälter 19 gepumpt wird. Hierzu wird das Ventil 20 geöffnet und die Wasserweiche 16 so gesteuert, dass deren Ausgänge geschlossen sind. Um die Befüllung des Vorratsbehälters 19 zu beschleunigen, kann die Umwälzpumpe 14 nun mit ihrer normalen Drehzahl, d. h. insbesondere mit einer höheren Drehzahl als im Vorheizzyklus, betrieben werden. Die Heizeinrichtung 15 kann dabei deaktiviert werden. Wenn der Vorratsbehälter 19 gefüllt ist, kann das Ventil 20 wieder geschlossen werden und die Umwälzpumpe 14 ausgeschaltet werden. Die Pumpphase und der Vorheizzyklus insgesamt sind damit beendet.

Die Tür 5 kann nun geöffnet werden, um erstmalig oder zusätzlich Spülgut in die Spülkammer 6 einzubringen. Wenn die Spülkammer 6 wie vorgesehen beladen ist, kann der Bediener ein Spülprogramm zum Steuern eines Spülgangs aufrufen bzw. starten. Das Spülprogramm kann nun unter Verwendung von im Vorratsbehälter 19 befindlicher voraufgewärmter Spülflotte S durchgeführt werden, so dass Heizphasen während des Spülgangs im Vergleich zu konventionellen Geschirrspülmaschinen kürzer ausfallen können.

Während des Spülgangs kann während eines oder mehrerer flüssigkeitsführender Teilspülgänge das Spülgut mit Spülflotte S behandelt werden, indem Spülflotte S, welche zunächst über den steuerbaren Auslass 21 aus dem Vorratsbehälter 19 entnommen wird, mittels der Umwälzpumpe 14 über die Heizeinrichtung 15, über die Wasserweiche 16 zu den Sprüharmen 17 und 18 geleitet wird. Die Heizeinrichtung 15 im Flüssigkeitskreislaufsystem kann dabei bedarfsweise zum Nachheizen der Spülflotte S verwendet werden. Dabei kann die Wasserweiche 16 so gesteuert werden, dass die Sprüharme 17 und 18 alternierend oder gleichzeitig mit Spülflotte S versorgt werden. Während des Spülgangs wird die Umwälzpumpe 14 in aller Regel mit ihrer normalen Drehzahl betrieben, so dass die aus den Sprüharmen 17 und 18 austretende Spülflotte S von unten gegen das Spülgut gesprüht wird. Der Austritt der Spülflotte S während des Spülgangs ist in Figur 1 durch gepunktete Pfeile veranschaulicht.

Figur 2 zeigt den zeitlichen Ablauf eines beispielhaften Betriebsablaufes BA einer erfindungsgemäßen Geschirrspülmaschine 1, wobei ein Vorheizzyklus VHZ und ein Spülgang SG dargestellt ist. Auf einer gemeinsamen Zeitachse t zeigt eine Kurve Z11 den Betriebszustand der Zuführeinrichtung 11, eine Kurve Z14 den Betriebszustand der Umwälzpumpe 14, eine Kurve Z15 den Betriebszustand der Heizeinrichtung 15, eine Kurve Z16 den Betriebszustand der Wasserweiche 16, eine Kurve Z20 den Betriebszustand des Ventils 20 und eine Kurve Z21 den Betriebszustand des steuerbaren Auslasses 21.

Zu Beginn des Vorheizzyklus VHZ wird eine Füllphase FP durchgeführt, deren Zweck es ist, eine vorgesehen Menge an Spülflotte S in die Spülkammer 6 der Geschirrspülmaschine 1 einzubringen. Hierzu kann die Zuführeinrichtung 11 in einen Betriebszustand "1" gebracht werden, bei dem ein Zufluss von Rohwasser RW erfolgt. Während der Füllphase FP ist die Umwälzpumpe 14 und die Heizeinrichtung 15 ausgeschaltet, was in Figur 2 jeweils als Betriebszustand "0" bezeichnet ist. Beide Ausgänge der Wasserweiche 16 sind ebenso wie das Ventil 20 und der steuerbare Auslass 21 geschlossen. Diese Betriebszustände der Wasserweiche bzw. des steuerbaren Auslasses 21 sind in Figur 2 mit "0" bezeichnet. Wenn die vorgesehene Menge von Rohwasser RW in die Spülkammer 6 eingebracht ist, so wird die Zuführeinrichtung 11 geschlossen, was in Figur 2 als Betriebszustand "0" dargestellt ist.

Im Ausführungsbeispiel der Figur 2 werden die Füllphase FP und die Heizphase HP des Vorheizzyklus zeitlich nacheinander durchgeführt. Es wäre jedoch auch möglich, dass sich die Füllphase FP und die Heizphase HP überlappen. Während der Heizphase HP wird mittels der Umwälzpumpe 14 ein Umwälzstrom US erzeugt, indem die Umwälzpumpe 14 mit geringer Drehzahl betrieben wird. Dies ist insbesondere geringer als im nachfolgenden Reinigungsgang RG. Dieser Betriebszustand der Umwälzpumpe 14 ist in Figur 2 als "1" benannt. Der Umwälzstrom US wird dabei mittels der Heizeinrichtung 15 beheizt. Der Einschaltzustand der Heizeinrichtung 15 ist mit "1" bezeichnet. Die Wasserweiche 16 ist dabei so gesteuert, dass lediglich der untere Sprüharm 18 mit Spülflotte S versorgt wird. Dieser Betriebszustand der Wasserweiche 16 wird in Figur 2 als "1" dargestellt. Wenn die Spülflotte S die vorgesehene Temperatur erreicht hat, wird die Heizeinrichtung 15 wieder ausgeschaltet und somit die Heizphase HP beendet.

Während der nun folgenden Pumpphase PP des Vorheizzyklus kann die Wasserweiche 16 wieder in den ursprünglichen Zustand "0" zurückgebracht werden, so dass deren beide Ausgänge geschlossen sind. Hingegen wird während der Pumpphase PP das Ventil 20 geöffnet, was durch den Wert "1" dargestellt ist. Weiterhin wird während der Pumpphase PP die Umwälzpumpe 14 mit höherer Drehzahl als in der Heizphase HP betrieben, wobei dieser Betriebszustand der Umwälzpumpe 14 in Figur 2 mit "2" symbolisiert ist. Wenn die vorgesehen Menge an Spülflotte S in den Vorratsbehälter 19 gepumpt ist, so wird die Umwälzpumpe 14 ausgeschaltet, das Ventil 20 geschlossen und die Pumpphase PP sowie der Vorheizzyklus VHZ insgesamt beendet. Nach dem Ende der Pumpphase PP kann die Ausgabe einer Meldung vorgesehen sein, welche dem Benutzer das Ende des Vorheizzyklus VHZ signalisiert. Hierdurch wird der Bediener in die Lage versetzt, den nunmehr möglichen Spülgang sobald als möglich zu nutzen. Die Ausgabe der Meldung kann dabei über die Bedienschnittstelle 3 erfolgen, welche hierzu akustische und/oder optische Ausgabemittel umfassen kann.

Die Geschirrspülmaschine 1 verharrt nun so lange in einem Ruhezustand, bis der Bediener durch Aufrufen eines Spülprogramms einen Spülgang SG startet. Im Beispiel der Figur 2 umfasst der Spülgang SG in dieser Reihenfolge einen Reinigungsgang RG, einen Klarspülgang KG und einen Trocknungsgang TG. Es versteht sich von selbst, dass der Spülgang SG auch weitere Teilspülgänge, beispielsweise einen Vorspülgang oder einen Zwischenspülgang umfassen könnte.

Zu Beginn des Reinigungsgangs RG wird der steuerbare Auslass 21 geöffnet, um vorgeheizte Spülflotte S in die Spülkammer 6 gelangen zu lassen. Alternativ können der Auslass 21 und die Zuleitung mit dem Ventil 20 auch durch eine einzige Zulaufleitung mit Sperrventil realisiert sein, die vorzugsweise unterhalb des Bodens des Vorratsbehälters 19 angeordnet ist und mit dem Flüssigkeitskreislauf verbunden ist. Dann wird das Sperrventil zum Ablassen der zwischengespeicherten Spülflottenflüssigkeit geöffnet, wodurch diese gespeicherte Flüssigkeit unter Schwerkraftwirkung in den Flüssigkeitskreislauf, insbesondere zur Umwälzpumpe 14 ablaufen kann. Die Kurve Z21 symbolisiert diesen Betriebszustand durch kurzzeitige Einnahme des Wertes "1". Ebenfalls zu Beginn des Reinigungsgangs RG wird die Umwälzpumpe 14 eingeschaltet und mit hoher Drehzahl, insbesondere höherer Drehzahl als beim Vorheizzyklus betrieben. Falls erforderlich kann auch die Heizeinrichtung 15 für einen kurzen Zeitraum eingeschaltet werden, falls die Temperatur der in den Flüssigkeitskreislauf eingebrachten Spülflotte S nicht ausreichend sein sollte. Die Wasserweiche 16 wird dabei so gesteuert, dass alternierend der untere Sprüharm 18 und der obere Sprüharm 17 mit Spülflotte S beschickt wird. Die Kurve Z16 zeigt dies durch abwechselnde Einnahme der Werte "1" bzw. "2". In einer Endphase des Reinigungsgangs RG ist die Umwälzpumpe 14 ausgeschaltet und die Spülflotte S des Reinigungsgangs wird in nicht dargestellter Weise mit Hilfe der Laugenpumpe 24 über den Abwasseranschluss 25 abgepumpt.

Zu Beginn des Klarspülgangs KG kann der steuerbare Auslass 21 ggf. erneut geöffnet werden, falls er ausreichend groß dimensioniert ist und noch vorerwärmte Spülflottenflüssigkeit enthält, um Spülflotte S in die Spülkammer 6 einzuleiten. Ansonsten erfolgt der Wasserzulauf für den Klarspülgang wie sonst auch üblich über die Zuführeinrichtung 11. Ebenso wird die Umwälzpumpe 14 erneut eingeschaltet und mit hoher Drehzahl betrieben. Da während des Klarspülgangs KG in aller Regel eine höhere Temperatur für die Spülflotte erforderlich ist als während eines Reinigungsgangs RG, wird in aller Regel die Heizeinrichtung 15 erneut für einen gewissen Zeitraum eingeschaltet. Die Wasserweiche 16 wird während des Klarspülgangs KG ebenfalls so gesteuert, dass die Sprüharme 17 und 18 abwechselnd mit Wasser versorgt werden. Zu Ende des Klarspülgangs KG wird die Umwälzpumpe 14 erneut abgeschaltet und die Spülflotte S des Klarspülgangs in Figur 2 in nicht gezeigter Weise abgepumpt.

Die anschließende Trocknung des Spülguts im Trocknungsgang TG erfolgt beispielsweise durch sogenannte Eigentrocknung, bei dem das am Spülgut anhaftende Restwasser verdunstet und beispielsweise am Spülbehälter 4 kondensiert, oder durch eine im Rahmen dieser Anmeldung nicht beschriebenen Trocknungseinrichtung.

Insgesamt ergibt sich eine Verkürzung der Dauer des Spülgangs SG, da aufgrund des zuvor durchgeführten Vorheizzyklus sowohl für den Reinigungsgang RG als auch ggf. für den Klarspülgang KG vorgewärmte Spülflotte S zur Verfügung steht. Hierdurch können die Heizzeiten sowohl während des Reinigungsgangs RG als auch ggf. während des Klarspülgangs KG kurz gehalten werden.

Auf diese Weise kann eine Verkürzung der Laufzeit einer erfindungsgemäß ausgebildeten Geschirrspülmaschine durch Erwärmung von Spülflotte vor Start eines Spülprogramms erreicht werden. In einem vorteilhaften Ausführungsbeispiel der vorliegenden Erfindung wird ein Gerät mit einer BLDC-Pumpe, einem Flottenspeicher und einer Wasserweiche verwendet. Dabei wird zunächst das Wasser in den Spülbehälter gefüllt. Die Wasserweiche wird dann insbesondere so gesteuert, dass sie nur den unteren Sprüharm freigibt. Nun wird die Pumpe eingeschaltet und mit so niedriger Drehzahl betrieben, dass nur so viel Wasser aus dem Sprüharm kommt, dass das evtl. im Gerät befindliche Geschirr nicht besprüht wird. Danach wird die Heizung aktiviert und das Wasser weiter umgewälzt. Wenn die gewünschte Temperatur erreicht ist, wird das Abschlussventil des Flottenspeichers geöffnet, alle Zuführungen zu den Sprühebenen geschlossen, die Drehzahl des Motors erhöht und das im Gerät befindliche Wasser in den Flottenspeicher gepumpt. Danach wird das Ventil in der Zuführleitung zum Flottenspeicher wieder verschlossen. Die beschriebene Vorheizfunktion kann insbesondere über Optionstasten angewählt werden. Durch diese vorteilhafte Ausführungsvariante kann eine einfache und kostengünstige Lösung für das Vorheizen einer Geschirrspülmaschine ohne zusätzliches Heizelement bereitgestellt werden.

Insbesondere kann der Flottenspeicher bzw. Vorratsbehälter am Ende des Klarspülgangs des jeweilig ablaufenden Geschirrspülprogramms mit der gebrauchten Klarspülflottenflüssigkeit gefüllt werden. Wenn später ein Vorheizzyklus gewünscht ist, kann diese gespeicherte Spülflottenflüssigkeit aus dem Vorratsbehälter in den Flüssigkeitskreislauf der Geschirrspülmaschine abgelassen werden oder laufen, und dann in analoger Weise wie zu den vorstehend Ausführungsvarianten zum Vorheizzyklus beschrieben aufgeheizt und in den Vorratsbehälter zurückgepumpt werden. In diesem Fall ist der Zulauf von Rohwasser aus der Zuführeinrichtung nicht erforderlich.

### Bezugszeichenl iste

- 1: Geschirrspülmaschine
- 2: Steuereinrichtung
- 3: Bedienschnittstelle
- 4: Spülbehälter
- 5: Tür
- 6: Spülkammer
- 7: oberer Geschirrkorb
- 8: unterer Geschirrkorb
- 9: Ausfahrschiene
- 10: Ausfahrschiene
- 11: Zuführeinrichtung für Rohwasser
- 12: Boden des Spülbehälters
- 13: Sammeltopf
- 14: Umwälzpumpe
- 15: Heizeinrichtung
- 16: Wasserweiche
- 17: oberer Sprüharm
- 18: unterer Sprüharm
- 19: Vorratsbehälter
- 20: Ventil
- 21: steuerbarer Auslass
- 22: Isoliermittel
- 23: Dosiereinrichtung
- 24: Laugenpumpe
- 25: Abwasseranschluss

- RW: Rohwasser
- S: Spülflotte
- US: Umwälzstrom
- AW: Abwasser

- BA: Betriebsablauf
- VHZ: Vorheizzyklus
- FP: Füllphase
- HP: Heizphase
- PP: Pumpphase
- SG: Spülgang
- RG: Reinigungsgang
- KG: Klarspülgang
- TG: Trocknungsgang
- Z11: Betriebszustand der Zuführeinrichtung
- Z14: Betriebszustand der Umwälzpumpe
- Z15: Betriebszustand der Heizeinrichtung
- Z16: Betriebszustand der Wasserweiche
- Z20: Betriebszustand des Ventils
- Z21: Betriebszustand des steuerbaren Auslasses

## Patentansprüche

1. Geschirrspülmaschine (1), insbesondere Haushaltsgeschirrspülmaschine (1), mit einer Steuereinrichtung (2), bei der mindestens ein Spülprogramm zum Steuern eines Spülgangs (SG) zum Spülen von Spülgut in einer Spülkammer (6) und mindestens ein Vorheizprogramm zum Steuern eines Vorheizzyklus (VHZ) zum Vorheizen von Spülflotte (S) für einen Spülgang (SG) jeweils getrennt voneinander aufrufbar sind, wobei der Vorheizzyklus (VHZ) eine Heizphase (HP) umfasst, während der ein Umwälzen von Spülflotte (S) und eine Beheizung der umgewälzten Spülflotte (S) erfolgt, **dadurch gekennzeichnet, dass** der Vorheizzyklus (VHZ) eine der Heizphase (HP) nachgelagerte Pumpphase (PP) umfasst, während der ein Pumpen von zuvor umgewälzter und beheizter Spülflotte (S) in einen Vorratsbehälter (19) zum Speichern von Spülflotte (S) erfolgt.

2. Geschirrspülmaschine nach einem der vorstehenden Ansprüche, **dadurch gekennzeichnet, dass** während der Heizphase (HP) des Vorheizzyklus (VHZ) Spülflotte (S) durch eine Heizeinrichtung (15) beheizt ist, welche als Durchlaufheizung (15) ausgebildet ist.

3. Geschirrspülmaschine nach einem der vorstehenden Ansprüche, **dadurch gekennzeichnet, dass** während der Heizphase (HP) des Vorheizzyklus (VHZ) Spülflotte (S) durch eine Umwälzpumpe (14) umgewälzt ist, welche eingangsseitig mit einem Sammeltopf (13) der Spülkammer (6) verbunden ist.

4. Geschirrspülmaschine nach einem der vorstehenden Ansprüche, **dadurch gekennzeichnet, dass** während der Heizphase (HP) des Vorheizzyklus (VHZ) Spülflotte (S) über mindestens eine in der Spülkammer (6) angeordnete Sprüheinrichtung (17, 18) in den Sammeltopf (13) der Spülkammer (6) zurückgeführt ist, welche mit der Ausgangsseite der Umwälzpumpe (14) verbindbar ist, und welche zum Besprühen von Spülgut mit Spülflotte (S) während eines Spülgangs (SG) vorgesehen ist.

5. Geschirrspülmaschine nach einem der vorstehenden Ansprüche, **dadurch gekennzeichnet, dass** während der Heizphase (HP) des Vorheizzyklus (VHZ) Spülflotte (S) im Wesentlichen über ein in einem unteren Bereich der Spülkammer (6) angeordnetes Sprühelement (18) einer Sprüheinrichtung in den Sammeltopf (13) der Spülkammer (6) zurückgeführt ist.

6. Geschirrspülmaschine nach einem der Ansprüche 4 oder 5, **dadurch gekennzeichnet, dass** die Sprüheinrichtung mehrere individuell über eine Wasserweiche (16) mit der Umwälzpumpe (14) verbindbare Sprühelemente (17, 18) aufweist, und dass die Wasserweiche (16) so gesteuert ist, dass während der Heizphase (HP) des Vorheizzyklus (VHZ) Spülflotte (S) im Wesentlichen über ein in einem unteren Bereich der Spülkammer (6) angeordnetes Sprühelement (18) in den Sammeltopf (13) der Spülkammer (6) zurückgeführt ist.

7. Geschirrspülmaschine nach einem der vorstehenden Ansprüche, **dadurch gekennzeichnet, dass** eine Drehzahl der Umwälzpumpe (14) so gesteuert ist, dass diese während der Heizphase (HP) des Vorheizzyklus (VHZ) geringer ist als ihre Nenndrehzahl.

8. Geschirrspülmaschine nach einem der vorstehenden Ansprüche, **dadurch gekennzeichnet, dass** die Drehzahl der Umwälzpumpe (14) so gesteuert ist, dass während der Heizphase (HP) des Vorheizzyklus (VHZ) aus einem unter einem Geschirrkorb (8) angeordneten Sprühelement (18) einer Sprüheinrichtung austretende Spülflotte (S) den Geschirrkorb (8) und/oder das darin befindliche Spülgut kaum oder im Wesentlichen nicht erreicht.

9. Geschirrspülmaschine nach einem der vorstehenden Ansprüche, **dadurch gekennzeichnet, dass** die Umwälzpumpe (14) einen bürstenlosen Elektromotor, vorzugsweise einen bürstenlosen Gleichstrommotor, umfasst.

10. Geschirrspülmaschine nach einem der vorstehenden Ansprüche, **dadurch gekennzeichnet, dass** während der Pumpphase (PP) des Vorheizzyklus (VHZ) Spülflotte (S) durch die Umwälzpumpe (14) über die Wasserweiche (16) oder über ein Ventil (20) in den Vorratsbehälter (19) gepumpt ist.

11. Geschirrspülmaschine nach einem der vorstehenden Ansprüche, **dadurch gekennzeichnet, dass** nach dem Ende der Pumpphase (PP) des Vorheizzyklus (VHZ) eine Ausgabe einer Meldung vorgesehen ist, welche dem Benutzer das Ende des Vorheizzyklus (VHZ) signalisiert.

12. Geschirrspülmaschine nach Anspruch 11, **dadurch gekennzeichnet, dass** die Meldung über eine Bedienschnittstelle (3) erfolgt, welche akustische und/oder optische Ausgabemittel umfasst.

13. Geschirrspülmaschine nach einem der vorstehenden Ansprüche, **dadurch gekennzeichnet, dass** während der Pumpphase (PP) des Vorheizzyklus (VHZ) die Drehzahl der Umwälzpumpe (14) im Vergleich zur Heizphase (HP) erhöht ist.

14. Geschirrspülmaschine nach einem der vorstehenden Ansprüche, **dadurch gekennzeichnet, dass** Isoliermittel (22) vorgesehen sind, welche einer Übertragung von im Inneren des Vorratsbehälters (19) befindlicher Wärme nach außen entgegenwirken.

15. Geschirrspülmaschine nach einem der vorstehenden Ansprüche, **dadurch gekennzeichnet, dass** der Vorratsbehälter (19) so ausgebildet ist, dass darin befindliche Spülflotte (S) durch ihre Gewichtskraft über einen steuerbaren Auslass (21) in die Spülkammer (6) der Geschirrspülmaschine (1) gelangen kann.

16. Verfahren zum Betreiben einer Geschirrspülmaschine (1), insbesondere einer Geschirrspülmaschine nach einem der vorstehenden Ansprüche, bei dem ein Spülgang (SG) zum Spülen von Spülgut in einer Spülkammer (6) und ein Vorheizzyklus (VHZ) zum Vorheizen von Spülflotte (S) für den Spülgang (SG) durchgeführt wird, wobei der Vorheizzyklus (VHZ) eine Heizphase (HP) umfasst, während der Spülflotte (S) umgewälzt und beheizt wird, **dadurch gekennzeichnet, dass** der Vorheizzyklus (VHZ) eine der Heizphase (HP) nachgelagerte Pumpphase (PP) umfasst, während der zuvor umgewälzte und beheizte Spülflotte (S) in einen Vorratsbehälter (19) zum Speichern von Spülflotte (S) gepumpt wird.

## Claims

1. Dishwasher (1), in particular a domestic dishwasher (1), having a control device (2), in the case of which at least one dishwashing program for controlling a washing cycle (SG) for washing items to be washed in a washing chamber (6) and at least one preheating program for controlling a preheating cycle (VHZ) for preheating washing fluid (S) for a washing cycle (SG) can be called up separately from each other, with the preheating cycle (VHZ) comprising a heating phase (HP) during which washing fluid (S) is circulated and the circulated washing fluid (S) heated, **characterised in that** the preheating cycle (VHZ) includes downstream of the heating phase (HP) a pumping phase (PP) during which previously circulated and heated washing fluid (S) is pumped into a reservoir (19) for storing washing fluid (S).

2. Dishwasher according to one of the preceding claims, **characterised in that** during the heating phase (HP) of the preheating cycle (VHZ), washing fluid (S) is heated by a heating device (15) embodied as a continuous-flow heater (15).

3. Dishwasher according to one of the preceding claims, **characterised in that** during the heating phase (HP) of the preheating cycle (VHZ), washing fluid (S) is circulated by a circulating pump (14) that is connected at its input side to a collecting pot (13) belonging to the washing chamber (6).

4. Dishwasher according to one of the preceding claims, **characterised in that** during the heating phase (HP) of the preheating cycle (VHZ), washing fluid (S) is fed back into the collecting pot (13) of the washing chamber (6) via at least one spraying device (17, 18) located in the washing chamber (6), which device can be connected to the output side of the circulating pump (14) and is provided for spraying items to be washed with washing fluid (S) during a washing cycle (SG).

5. Dishwasher according to one of the preceding claims, **characterised in that** during the heating phase (HP) of the preheating cycle (VHZ), washing fluid (S) is fed back into the collecting pot (13) of the washing chamber (6) substantially via a spraying element (18) of a spraying device, which element is located in a lower region of the washing chamber (6).

6. Dishwasher according to one of claims 4 or 5, **characterised in that** the spraying device has a plurality of spraying elements (17, 18) that can be individually connected to the circulating pump (14) via a water divider (16) and **in that** the water divider (16) has been controlled such that washing fluid (S) is fed back into the collecting pot (13) of the washing chamber (6) during the heating phase (HP) of the preheating cycle (VHZ) substantially via a spraying element (18) located in a lower region of the washing chamber (6).

7. Dishwasher according to one of the preceding claims, **characterised in that** a speed of the circulating pump (14) is controlled so as to be slower during the heating phase (HP) of the preheating cycle (VHZ) than its nominal speed.

8. Dishwasher according to one of the preceding claims, **characterised in that** the speed of the circulating pump (14) has been controlled such that washing fluid (S) exiting a spraying element (18) of a spraying device, which element is located underneath a crockery basket (8), during the heating phase (HP) of the preheating cycle (VHZ) will barely or for the most part not reach the crockery basket (8) and/or the items to be washed that are located therein.

9. Dishwasher according to one of the preceding claims, **characterised in that** the circulating pump (14) includes a brushless electric motor, preferably a brushless direct-current motor.

10. Dishwasher according to one of the preceding claims, **characterised in that** washing fluid (S) is pumped into the reservoir (19) by the circulating pump (14) via the water divider (16) or via a valve (20) during the pumping phase (PP) of the preheating cycle (VHZ).

11. Dishwasher according to one of the preceding claims, **characterised in that** the output of a message signalling the end of the preheating cycle (VHZ) to the user is provided after the end of the pumping phase (PP) of the preheating cycle (VHZ).

12. Dishwasher according to claim 11, **characterised in that** the message is fed out via an operator interface (3) which includes acoustic and/or visual output means.

13. Dishwasher according to one of the preceding claims, **characterised in that** the speed of the circulating pump (14) is increased during the pumping phase (PP) of the preheating cycle (VHZ) compared with the heating phase (HP).

14. Dishwasher according to one of the preceding claims, **characterised in that** insulating means (22) are provided which counteract an outward transfer of heat from inside the reservoir (19).

15. Dishwasher according to one of the preceding claims, **characterised in that** the reservoir (19) is embodied such that washing fluid (S) located therein can enter the washing chamber (6) of the dishwasher (1) through the force of its weight via a controllable outlet (21).

16. Method for operating a dishwasher (1), in particular a dishwasher according to one of the preceding claims, with which method a washing cycle (SG) for washing items to be washed in a washing chamber (6) and a preheating cycle (VHZ) for preheating washing fluid (S) for the washing cycle (SG) is run, with the preheating cycle (VHZ) including a heating phase (HP) during which washing fluid (S) is circulated and heated, **characterised in that** the preheating cycle (VHZ) includes a pumping phase (PP) that is downstream of the heating phase (HP) and during which previously circulated and heated washing fluid (S) is pumped into a reservoir (19) for storing washing fluid (S).

## Revendications

1. Lave-vaisselle (1), notamment lave-vaisselle à usage domestique (1), comprenant un dispositif de commande (2) dans lequel au moins un programme de lavage destiné à commander un cycle de lavage (SG) pour laver des produits à laver dans une chambre de lavage (6) et au moins un programme de préchauffage destiné à commander un cycle de préchauffage (VHZ) pour préchauffer la flotte de lavage (S) pour un cycle de lavage (SG) peuvent être appelés respectivement séparément l'un de l'autre, le cycle de préchauffage (VHZ) comprenant une phase de chauffage (HP) pendant laquelle une circulation de la flotte de lavage (S) et un chauffage de la flotte de lavage (S) en circulation sont réalisés, **caractérisé en ce que** le cycle de préchauffage (VHZ) comprend une phase de pompage (PP) située après la phase de chauffage (HP), pendant laquelle un pompage dans un réservoir de stockage (19) de la flotte de lavage (S), auparavant mise en circulation et chauffée, est réalisé pour stocker la flotte de lavage (S).

2. Lave-vaisselle selon la revendication 1, **caractérisé en ce que** pendant la phase de chauffage (HP) du cycle de préchauffage (VHZ), la flotte de lavage (S) est chauffée par un dispositif de chauffage (15), lequel est réalisé comme chauffage instantané (15).

3. Lave-vaisselle selon l'une quelconque des revendications précédentes, **caractérisé en ce que** pendant la phase de chauffage (HP) du cycle de préchauffage (VHZ), la flotte de lavage (S) est mise en circulation par une pompe de circulation (14), laquelle est reliée côté entrée à un bac collecteur (13) de la chambre de lavage (6).

4. Lave-vaisselle selon l'une quelconque des revendications précédentes, **caractérisé en ce que** pendant la phase de chauffage (HP) du cycle de préchauffage (VHZ), la flotte de lavage (S) est ramenée dans le bac collecteur (13) de la chambre de lavage (6) par l'intermédiaire au moins d'un dispositif d'arrosage (17, 18) disposé dans la chambre de lavage (6), lequel dispositif d'arrosage peut être relié au côté sortie de la pompe de circulation (14) et lequel est ménagé pour arroser les produits à laver avec la flotte de lavage (S) pendant un cycle de lavage (SG).

5. Lave-vaisselle selon l'une quelconque des revendications précédentes, **caractérisé en ce que** pendant la phase de chauffage (HP) du cycle de préchauffage (VHZ), la flotte de lavage (S) est ramenée dans le bac collecteur (13) de la chambre de lavage (6) essentiellement par l'intermédiaire d'un élément d'arrosage (18) d'un dispositif d'arrosage, disposé dans une partie inférieure de la chambre de lavage (6).

6. Lave-vaisselle selon l'une quelconque des revendications 4 ou 5, **caractérisé en ce que** le dispositif d'arrosage présente plusieurs éléments d'arrosage (17, 18) pouvant être reliés individuellement à la pompe de circulation (14) par l'intermédiaire d'un distributeur d'eau (16), et **en ce que** le distributeur d'eau (16) est commandé de manière à ce que pendant la phase de chauffage (HP) du cycle de préchauffage (VHZ) la flotte de lavage (S) soit ramenée dans le bac collecteur (13) de la chambre de lavage (6) essentiellement par l'intermédiaire d'un élément d'arrosage (18) disposé dans une partie inférieure de la chambre de lavage (6).

7. Lave-vaisselle selon l'une quelconque des revendications précédentes, **caractérisé en ce qu'**une vitesse de rotation de la pompe de circulation (14) est commandée de manière à ce que pendant la phase de chauffage (HP) du cycle de préchauffage (VHZ), celle-ci soit plus petite que sa vitesse de rotation nominale.

8. Lave-vaisselle selon l'une quelconque des revendications précédentes, **caractérisé en ce que** la vitesse de rotation de la pompe de circulation (14) est commandée de manière à ce que pendant la phase de chauffage (HP) du cycle de préchauffage (VHZ), la flotte de lavage (S) sortant d'un élément d'arrosage (18) d'un dispositif d'arrosage, disposé en-dessous d'un panier à vaisselle (8), atteigne à peine ou n'atteigne essentiellement pas du tout le panier à vaisselle (8) et/ou les produits à laver s'y trouvant.

9. Lave-vaisselle selon l'une quelconque des revendications précédentes, **caractérisé en ce que** la pompe de circulation (14) comprend un moteur électrique sans balai, de préférence un moteur sans balai à courant continu.

10. Lave-vaisselle selon l'une quelconque des revendications précédentes, **caractérisé en ce que** pendant la phase de pompage (PP) du cycle de préchauffage (VHZ), la flotte de lavage (S) est pompée par la pompe de circulation (14) dans le réservoir de stockage (19) par l'intermédiaire du distributeur d'eau (16) ou par l'intermédiaire d'une soupape (20).

11. Lave-vaisselle selon l'une quelconque des revendications précédentes, **caractérisé en ce qu'**après la fin de la phase de pompage (PP) du cycle de préchauffage (VHZ), une sortie d'un message est ménagée, lequel signale à l'utilisateur la fin du cycle de préchauffage (VHZ).

12. Lave-vaisselle selon la revendication 11, **caractérisé en ce que** le message est réalisé par l'intermédiaire d'une interface de commande (3), laquelle comprend des moyens de sortie sonores et/ou visuels.

13. Lave-vaisselle selon l'une quelconque des revendications précédentes, **caractérisé en ce que** pendant la phase de pompage (PP) du cycle de préchauffage (VHZ), la vitesse de rotation de la pompe de circulation (14) est augmentée comparativement à la phase de chauffage (HP).

14. Lave-vaisselle selon l'une quelconque des revendications précédentes, **caractérisé en ce que** des moyens d'isolation (22) sont ménagés, lesquelles empêchent un transfert vers l'extérieur de la chaleur se trouvant à l'intérieur du réservoir de stockage (19).

15. Lave-vaisselle selon l'une quelconque des revendications précédentes, **caractérisé en ce que** le réservoir de stockage (19) est réalisé de manière à ce que la flotte de lavage (S) s'y trouvant puisse, en raison de son poids, arriver dans la chambre de lavage (6) du lave-vaisselle (1) par l'intermédiaire d'une sortie (21) réglable.

16. Procédé de fonctionnement d'un lave-vaisselle (1), notamment d'un lave-vaisselle à usage domestique, selon l'une quelconque des revendications précédentes, dans lequel un cycle de lavage (SG) destiné à laver des produits à laver dans une chambre de lavage (6) et un cycle de préchauffage (VHZ) destiné à préchauffer la flotte de lavage (S) pour le cycle de lavage (SG) sont réalisés, le cycle de préchauffage (VHZ) comprenant une phase de chauffage (HP) pendant laquelle la flotte de lavage (S) est mise en circulation et chauffée, **caractérisé en ce que** le cycle de préchauffage (VHZ) comprend une phase de pompage (PP) située après la phase de chauffage (HP), pendant laquelle la flotte de lavage (S), auparavant mise en circulation et chauffée, est pompée dans un réservoir de stockage (19) pour stocker la flotte de lavage (S).
